# FASCICULE DE BREVET EUROPEEN

(11) **EP 3 374 264 B1**
(45) Date de publication et mention de la délivrance du brevet: **05.01.2022**
(21) Numéro de dépôt: 16794268.9
(22) Date de dépôt: 07.11.2016
(51) Int. Cl.: B64D 11/06

(54) **SIÈGE D'AÉRONEF POUR PERSONNEL DE BORD**
FLUGZEUGSITZ FÜR CREW
AIRCRAFT SEAT FOR CREW PERSONNEL

(30) Priorité: 10.11.2015 EP 15193929
(43) Date de publication de la demande: 19.09.2018
(73) Titulaire: Safran Seats, 78370 Plaisir (FR)
(72) Inventeur: VERNY, Christian, 36100 Issoudun (FR); LEBEGUE, Brice, 36100 Issoudun (FR); MESAROS, Alexandre, 36100 Issoudun (FR)
(74) Mandataire: Marconnet, Sébastien
(86) Numéro de dépôt international: PCT/EP2016/076779
(87) Numéro de publication internationale: WO 2017/080939

(56) Documents cités:
- WO-A2-2005/060598
- WO-A2-2011/097206
- DE-A1- 3 634 839
- FR-A1- 2 804 072
- US-A1- 2007 262 625
- US-A1- 2014 225 400
- US-A1- 2014 300 145
- US-A1- 2014 300 162

## Description

La présente invention porte sur un siège pour personnel de bord de type grand confort destiné à être installé dans une cabine d'aéronef. L'invention vise à proposer un siège ergonomique, compact, et léger.

Les sièges pour personnel de bord de type grand confort connus également sous l'acronyme HCCAS (pour "High Comfort Cabin Attendant Seat" en anglais) sont conçus pour procurer un niveau de confort supérieur à celui des sièges pour personnel de bord classiques à assise rabattable, en autorisant des positions dans lesquelles le dossier et l'assise peuvent être inclinés.

Les sièges HCCAS connus comportent un repose-jambes équipé de bras qu'il est nécessaire de déplier pour permettre un appui sur le plancher de l'avion. Cette manipulation du siège qui ne peut pas être réalisée par un occupant installé sur le siège est relativement fastidieuse.

En outre, l'assise présente un angle fixe par rapport au plancher de l'avion. Le repose-jambes du siège dépasse également par rapport à l'assise lorsque le siège est replié, ce qui rend l'ensemble encombrant et limite l'espace de stockage sous le siège.

### <A>

L'invention vise notamment à remédier efficacement à ces inconvénients en proposant un siège pour personnel de bord selon la revendication 1.

### < A >

Le document US2007/262625 décrit une unité de siège comprenant un dossier inclinable configuré pour être incliné de manière à rester à l'intérieur d'un espace délimité par une coque.

Le document US2014/300162 décrit un siège d'avion comprenant un dossier de siège et une assise de siège configurés pour effectuer une translation horizontale par rapport au bâti de siège.

Le document FR2804072 décrit un siège rabattable comprenant une partie reliée à la structure du véhicule. Un dossier est pivoté à sa base par un pivot de liaison qui permet de rabattre le dossier sur l'assise.

L'invention permet de procurer un grand confort à l'occupant tout en proposant une configuration de siège compacte. En outre, l'invention permet au siège d'être ajusté sans à-coups d'une position à une autre alors que l'occupant est installé sur le siège.

Selon l'invention, ledit siège comporte en outre un dossier ayant une première extrémité montée rotative par rapport à l'assise et une deuxième extrémité montée rotative par rapport à une têtière dudit siège, ladite têtière étant montée coulissante par rapport à la structure de siège de manière à accompagner un mouvement dudit dossier.

Selon une réalisation, la glissière d'assise est montée rotative par rapport à la structure de siège pour permettre au siège de passer d'une position de stockage à une position assise.

Selon un exemple qui n'est pas revendiqué, l'assise est apte à prendre des positions intermédiaires entre la position rétractée et la position déployée.

Selon une réalisation, un moyen de manœuvre, tel qu'un levier, est apte à commander le passage d'une position à une autre par déverrouillage d'au moins un pion de verrouillage coopérant avec un logement ménagé dans la glissière d'assise, ledit moyen de manœuvre étant relié au pion de verrouillage via un câble de liaison. L'actionnement du levier peut être réalisé alors que l'occupant est en position assise sur le siège.

Selon une réalisation, ledit siège comporte un repose-jambes couplé à un axe monté rotatif par rapport à l'assise pour pouvoir passer d'une position de stockage dans laquelle le repose-jambes se situe sous l'assise à une position dépliée dans laquelle le repose-jambes se situe dans le prolongement de l'assise.

Selon une réalisation, ledit repose-jambes comporte une barre de synchronisation constituée à chacune de ses extrémités d'un galet, chaque galet étant apte à glisser le long d'un rail ménagé dans une face interne d'une paroi latérale de l'assise. Ce dispositif permet de conserver un maintien ferme en position déployée d'égale rigidité de part et d'autre du repose-jambe.

Selon une réalisation, un premier système de verrouillage comporte un loquet de verrouillage apte à bloquer la barre de synchronisation pour maintenir le repose-jambes en position dépliée.

Selon une réalisation, ledit siège comporte un deuxième système de verrouillage apte à bloquer le repose-jambes en position de stockage.

Selon une réalisation, le deuxième système de verrouillage comporte un logement de verrouillage implanté du côté du bord avant du repose-jambes apte à coopérer avec un crochet de verrouillage implanté du côté du bord arrière de l'assise.

Selon une réalisation, le premier et le deuxième systèmes de verrouillage sont actionnables via un moyen de manœuvre commun, tel qu'un levier. Selon une réalisation, un système d'amortissement est apte à absorber un effort appliqué sur le repose-jambes dépassant un seuil limite.

Selon un exemple qui n'est pas revendiqué, le système d'amortissement comporte au moins un organe élastique, tel qu'un vérin à gaz, ayant une première extrémité montée rotative par rapport à la barre de synchronisation et une deuxième extrémité montée rotative par rapport au repose-jambes.

Selon une réalisation, ledit siège comporte un repose-pieds monté coulissant par rapport au repose-jambes, et en ce qu'un moyen élastique est interposé entre le repose-pieds et le repose-jambes.

Selon une réalisation, ledit siège comporte un système de repliage automatique pour faire passer ledit siège automatiquement d'une position de confort à une position assise.

Selon une réalisation, le système de repliage automatique comporte un câble élastique ayant une extrémité fixée à la structure de siège et une autre extrémité fixée à l'assise, ledit câble passant par au moins une poulie d'orientation du câble située entre les deux extrémités dudit câble.

Selon une réalisation, ledit siège comporte un système de repliage automatique pour faire passer ledit siège automatiquement d'une position assise à une position de stockage.

Selon une réalisation, le système de repliage automatique comporte un câble élastique ayant une extrémité fixée à la structure de siège et une autre extrémité fixée à la glissière d'assise, ledit câble passant par au moins une poulie d'orientation du câble située entre les deux extrémités dudit câble.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
- Les figures 1a à 1c montrent différentes positions du siège pour personnel de bord selon la présente invention;
- La figure 2 est une vue de dessous de l'assise du siège selon l'invention en position déployée illustrant le système de verrouillage et de déverrouillage de l'assise pour autoriser son déplacement d'une position à l'autre;
- La figure 3 est une vue en coupe d'un pion de verrouillage implanté sur l'assise du siège selon l'invention;
- La figure 4a est une vue de dessous de la partie avant de l'assise du siège selon l'invention illustrant les systèmes de verrouillage permettant de maintenir le repose-jambes en position de stockage ou en position dépliée;
- La figure 4b est une vue détaillée du système de verrouillage permettant de maintenir le repose-jambes du siège selon l'invention en position dépliée;
- La figure 5 est une vue de dessous du repose-jambes du siège selon l'invention et du repose-pieds associé en position rétractée;
- La figure 6 est une vue de la partie haute du siège illustrant la liaison entre le dossier et la têtière du siège selon l'invention;
- La figure 7 est une vue de dessous de l'assise du siège selon l'invention en position déployée illustrant l'implantation d'un système de repliage automatique de l'assise vers la position rétractée;
- La figure 8 est une vue en perspective du siège selon l'invention en position déployée illustrant l'implantation d'un système de repliage automatique du siège vers la position de stockage.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

En outre, dans la description qui suit, les termes relatifs du type "haut" et "bas" sont entendus par rapport à un siège en position d'utilisation dans une cabine d'aéronef. Par ailleurs, on considère que la partie arrière du siège est située du côté du dossier, tandis que la partie avant du siège est située du côté opposé au dossier. En outre, les faces internes d'un élément donné sont tournées vers un plan médian de symétrie du siège, tandis que les faces externes sont tournées du côté opposé.

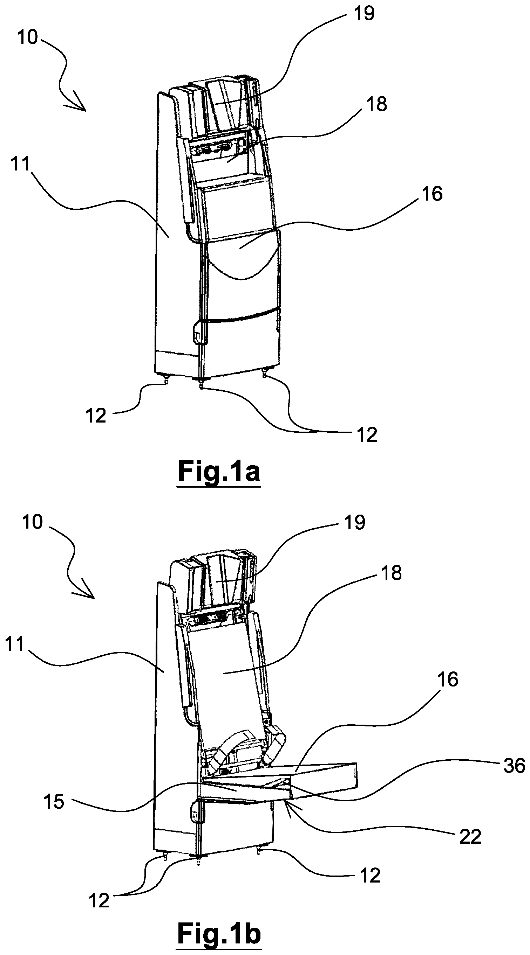

Les figures 1a à 1c montrent un siège 10 pour personnel navigant comportant une structure de siège 11 destinée à être fixée à une partie fixe d'un aéronef. A cet effet, la structure de siège 11 pourra comporter en partie inférieure des attaches 12 destinées à coopérer avec des rails de l'aéronef.

En variante, le siège 10 pourra être fixé sur une cloison de l'aéronef ou un meuble de l'aéronef.

Le siège 10 comporte également une glissière d'assise 15 montée rotative par rapport à la structure de siège 11, une assise 16 montée coulissante par rapport à la glissière d'assise 15, un dossier inclinable 18, une têtière ajustable 19, un repose-jambes extensible 22 associé à un système d'amortissement 23, et un repose-pieds 26 implanté dans le repose-jambes 22.

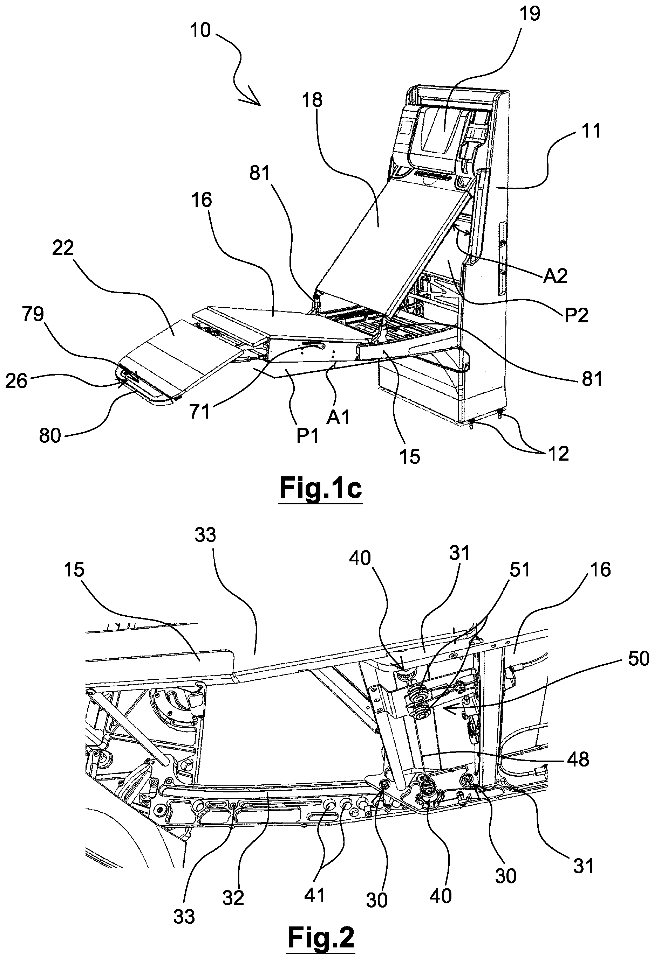

Le siège 10 est apte à prendre notamment une position de stockage montrée à la figure 1a dans laquelle l'assise 16 est rabattue contre la structure de siège 11, une position assise montrée à la figure 1b qui est prise lors des phases de stationnement, de décollage, et d'atterrissage de l'avion dite position TTOL (acronyme pour "Taxi-Take Off-Landing" en anglais). Le siège 10 peut également prendre une position de confort montrée à la figure 1c dans laquelle l'assise 16 est inclinée d'un angle A1 par rapport à un plan horizontal P1 parallèle au plancher de l'aéronef, et le dossier 18 est incliné d'un angle A2 par rapport à un plan vertical P2. Le plancher de l'aéronef s'étend dans un plan perpendiculaire à une direction d'extension longitudinale de la structure de siège.

Dans un exemple de réalisation, l'angle A1 est supérieur à 10 degrés, et vaut de préférence de l'ordre de 14 degrés; tandis que l'angle A2 est de l'ordre de 45 degrés.

Plus précisément, comme on peut le voir sur la figure 2, l'assise 16 est montée coulissante par rapport à la glissière d'assise 15 entre une position rétractée correspondant à la position assise du siège 10 et une position déployée correspondant à la position de confort.

A cet effet, des galets 30, par exemple au nombre de deux par côté, sont implantés dans la face externe de chaque paroi latérale 31 de l'assise 16. Ces galets 30 sont aptes à glisser le long d'un rail 32 correspondant ménagé dans la face interne d'un bras 33 de la glissière d'assise 15. Les bras 33 reliés entre eux sont positionnés de part et d'autre de l'assise 16. Les rails 32 présentent avantageusement une forme incurvée vers le haut, c'est-à-dire dans une direction opposée aux attaches 12 pour permettre à l'assise 16 de former l'angle A1 non nul par rapport au plancher lorsque l'assise 16 se trouve dans la position déployée. Lors de son déplacement vers la positon déployée, l'assise 16 suit un mouvement de rotation par rapport au centre d'un cercle correspondant à un rayon de courbure des rails 32.

Bien entendu, en variante la structure pourra être inversée, c'est-à-dire que les galets 30 sont implantés dans la glissière d'assise 15, tandis que les rails 32 sont ménagés dans les faces externes des parois latérales 31 de l'assise 16.

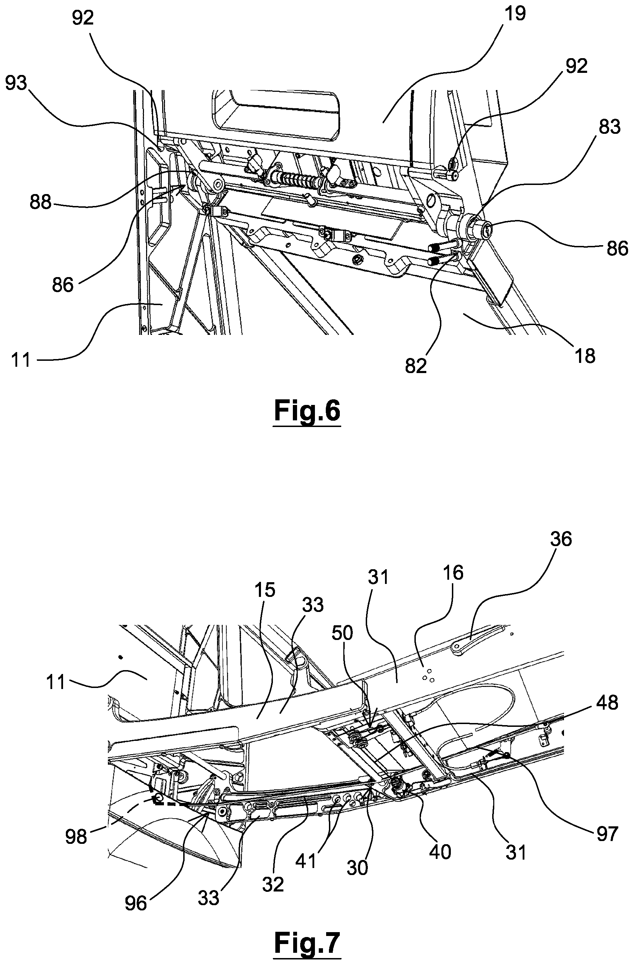

Un moyen de manœuvre 36, tel qu'un levier situé par exemple sur la droite de l'assise 16 (cf. figure 7), est apte à commander le passage d'une position à une autre de l'assise 16 par déverrouillage de pions de verrouillage 40 situés de part et d'autre de l'assise 16 et coopérant chacun avec un logement 41 correspondant ménagé dans la glissière d'assise 15.

On distingue des logements d'extrémité 41 correspondant aux positions extrême du siège 10 (position assise de la figure 1a et position de confort de la figure 1c), et des logements 41 situés entre les logements extrêmes pour permettre au siège 10 de prendre des positions de confort intermédiaire. Dans ces positions intermédiaires, les angles d'inclinaison de l'assise 16 et du dossier 18 sont inférieurs aux angles d'inclinaison maximum. Dans un exemple de réalisation, on prévoit six positions intermédiaires entre la position assise et la position de confort.

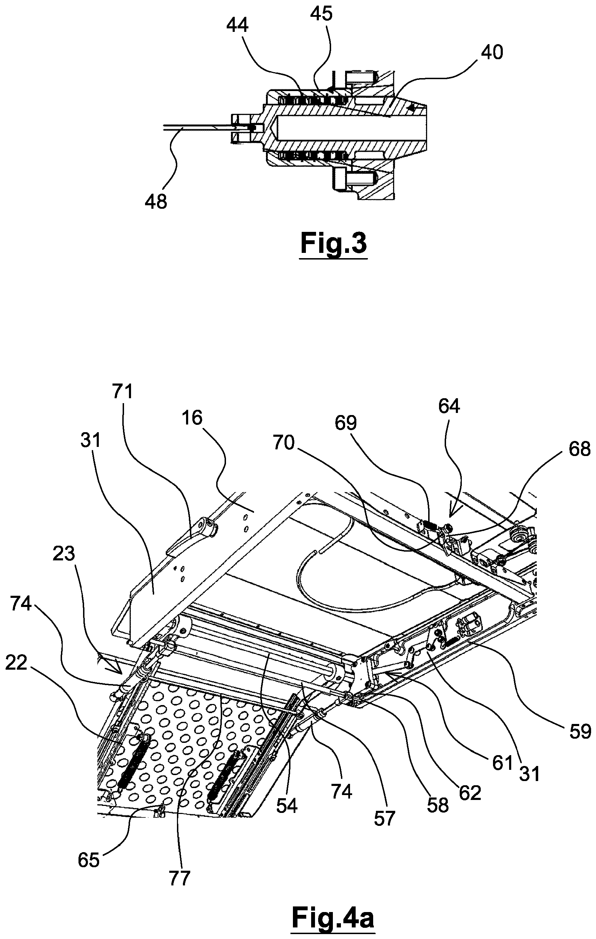

A cet effet, comme on peut le voir sur la figure 3, un organe élastique 44, tel qu'un ressort, monté à l'intérieur d'un boîtier 45 sollicite le pion de verrouillage 40, de telle façon que le pion 40 faisant saillie par rapport à la paroi latérale 31 de l'assise 16 pénètre dans un logement 41 correspondant, ce qui a pour effet de bloquer l'assise 16 en position. L'actionnement du levier 36 permet de tirer sur un câble 48 relié au pion 40 qui comprime alors le ressort 44, de sorte que le pion 40 se désengage du logement 41 pour passer dans un état déverrouillé, et autoriser le déplacement de l'assise 16 vers une autre position.

Un système de renvoi d'angle 50 comportant deux poulies 51 permettant d'orienter le câble 48 relié au levier 36 de chaque côté du siège 10 vers un pion de verrouillage 40 correspondant.

Le mouvement d'extension de l'assise 16 pourra ainsi être aisément commandé par actionnement du levier 36 et poussée du bassin de l'utilisateur vers l'avant du siège 10.

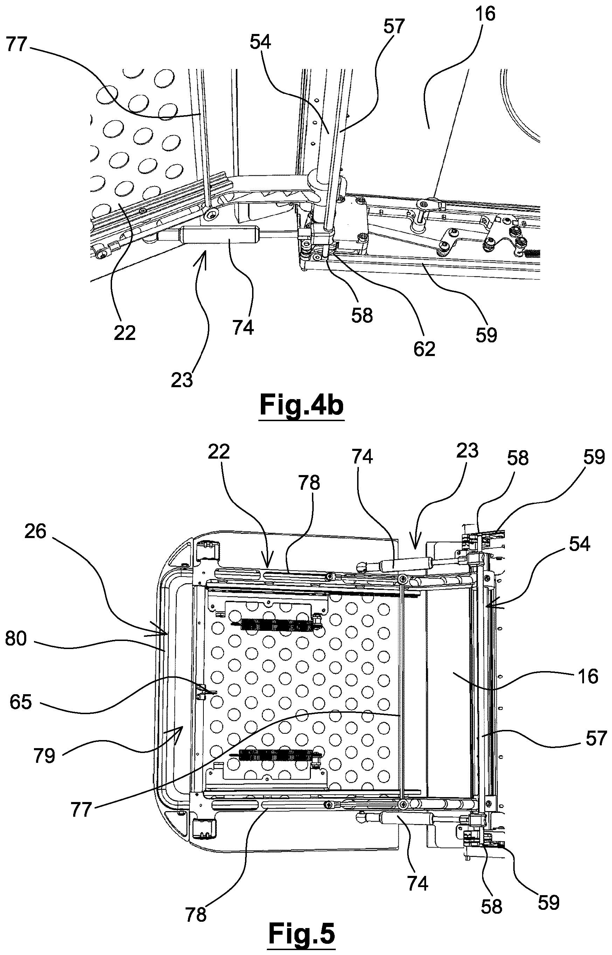

Par ailleurs, comme cela est visible sur les figures 4a, 4b, et 5, le repose-jambes 22 est couplé à un axe 54 monté rotatif par rapport à l'assise 16 pour pouvoir passer d'une position de stockage dans laquelle le repose-jambes 22 se situe sous l'assise 16 et dans le plan de l'assise, tel que cela est montré en figure 1b, à une position dépliée dans laquelle le repose-jambes 22 se situe dans le prolongement de l'assise 16, et inversement.

En outre, une barre transversale 57, dite de synchronisation, reliée mécaniquement au repose-jambes 22 comporte à chacune de ses extrémités un galet 58. Chaque galet 58 est apte à glisser le long d'un rail 59 ménagé dans la face interne d'une paroi latérale 31 correspondante de l'assise 16 lorsque le repose-jambes 22 passe d'une position à une autre.

Chaque rail 59 s'étend suivant une direction d'allongement longitudinale de la paroi latéral 31 correspondante et comporte une portion d'extrémité arrière dirigée vers le haut.

Un premier système de verrouillage 61 comporte un loquet de verrouillage 62 apte à bloquer la barre de synchronisation 57 pour maintenir le repose-jambes 22 en position dépliée.

Un deuxième système de verrouillage 64 est apte à bloquer le repose jambes 22 en position de stockage. A cette fin, le deuxième système de verrouillage 64 comporte un logement de verrouillage 65 implanté du côté du bord avant du repose-jambes 22 apte à coopérer avec un crochet de verrouillage 68 implanté du côté arrière de l'assise 16, tel que montré en figure 4a. Un ressort 69 sollicite le crochet 68 articulé en son centre contre une butée 70, de telle façon que le crochet 68 de verrouillage présente alors une orientation verticale et pénètre dans le logement 65 pour maintenir le repose-jambes 22 en position de stockage.

Lors de l'actionnement d'un moyen de manœuvre 71, tel qu'un deuxième levier situé du côté gauche de l'assise 16 (cf. figure 4a), un effort transmis via un câble est appliqué sur le crochet 68. Cela a pour effet d'incliner le crochet 68 suite à l'extension du ressort 69 pour libération du logement 65 et déverrouillage du repose-jambes 22.

Ce levier 71 pourra également commander le déverrouillage du loquet 62 du système de verrouillage 61. A cet effet, le levier 71 est relié aux deux systèmes de verrouillage 61, 64 au moyen d'un système de câble adapté.

Par ailleurs, le système d'amortissement 23 est apte à absorber un effort appliqué sur le repose-jambes 22 dépassant un seuil limite, par exemple de l'ordre de 200N. Ce seuil pourra toutefois être adapté à d'autres valeurs en fonction de l'application.

A cet effet, le système d'amortissement 23 comporte au moins un organe élastique 74, tel qu'un vérin à gaz, ayant une première extrémité montée rotative par rapport à la barre de synchronisation 57 et une deuxième extrémité montée rotative par rapport au repose-jambes 22. Dans l'exemple de réalisation représenté, on prévoit un vérin à gaz 74 de chaque côté de l'assise 16. Dans le cas d'une utilisation normale du siège 10, c'est-à-dire lorsqu'aucune surcharge n'est appliquée sur l'assise 16, les vérins à gaz 74 fonctionnent comme des bielles de liaison mécanique entre l'assise 16 et le repose-jambes 22.

En revanche, dans le cas où une surcharge est appliquée sur le repose-jambes 22, par exemple lorsqu'une personne s'assied sur le repose-jambes 22, le vérin 74 se rétracte sous l'effet du poids de la personne et autorise une rotation du repose-jambes 22 suivant son axe 54 alors que la barre de synchronisation 57 est bloquée en translation. Cela permet de protéger mécaniquement la structure de siège 11 en évitant que la surcharge lui soit transmise.

De préférence, le repose-pieds 26 est monté coulissant par rapport au repose-jambes 22. En outre, un moyen élastique 77 est interposé entre le repose-pieds 26 et le repose-jambes 22. Dans l'exemple représenté, le repose-pieds 26 présente une forme de U, les deux bras d'extrémité du repose-pieds 26 étant monté coulissants à l'intérieur de poutres latérales 78 du repose-pieds 26.

Le repose-pieds 26 peut être activé par insertion des talons dans un logement 79 s'étendant entre la barre de liaison 80 du U et le repose-jambes 22 puis en poussant avec les talons sur la barre 80 du repose-pieds 26. La rétractation du repose-pieds 26 est automatique lorsque la pression exercée par les talons est relâchée du fait de la présence du moyen élastique 77.

Par ailleurs, le dossier 18 comporte une première extrémité montée rotative par rapport à l'assise 16 et une deuxième extrémité montée rotative par rapport à la têtière 19 du siège 10.

A cet effet, on prévoit une liaison pivot entre des portions saillantes 81 situées de part et d'autre de l'assise 16 et l'extrémité inférieure du dossier 18, tel que montré en figure 1c.

Par ailleurs, comme on peut le voir sur la figure 6, l'extrémité supérieure du dossier 18 comporte de chaque côté une portion de liaison 82 montée rotative autour d'un axe 83 solidaire de la têtière 19. A cet effet, la portion de liaison 82 comporte une ouverture traversante pour le passage de l'axe 83. Un galet 86 fixé du côté de l'extrémité libre de l'axe 83 est destiné à coopérer avec un rail 88 correspondant. Un deuxième galet 92 fixé sur la têtière 19 est destiné à coopérer avec un rail 93 correspondant.

La têtière 19 est montée coulissante par rapport à la structure de siège 11. A cet effet, la ainsi munie de quatre galets (deux galets 86, 92 de chaque côté) coopérant chacun avec un rail 88, 93 correspondant ménagé dans un montant de la structure de siège 11.

Le déplacement des galets 86, 92 à l'intérieur des rails 88, 93 permet à la têtière 19 d'accompagner le mouvement du dossier 18 lorsque le siège 10 passe d'une position à une autre.

Le siège 10 est configuré de telle façon que lorsque l'assise 16 est en position déployée, le dossier 18 est incliné par rapport à un plan vertical de l'angle A2 de l'ordre de 45 degrés.

Généralement, du fait de l'inclinaison vers le haut de l'assise 16, le siège 10 pourra repasser automatiquement par gravité en position assise suite à un déverrouillage des pions 40. Toutefois, il sera possible de prévoir en outre un système de repliage automatique 96 du siège 10 pour le faire passer de la position de confort à la position assise.

A cet effet, comme on peut le voir sur la figure 7, le système de repliage automatique 96 comporte un câble élastique 97 ayant une extrémité fixée à la structure de siège 11 et une autre extrémité fixée à l'assise 16. Le câble 97 passe par une poulie d'orientation 98 du câble 97 située entre les deux extrémités du câble 97.

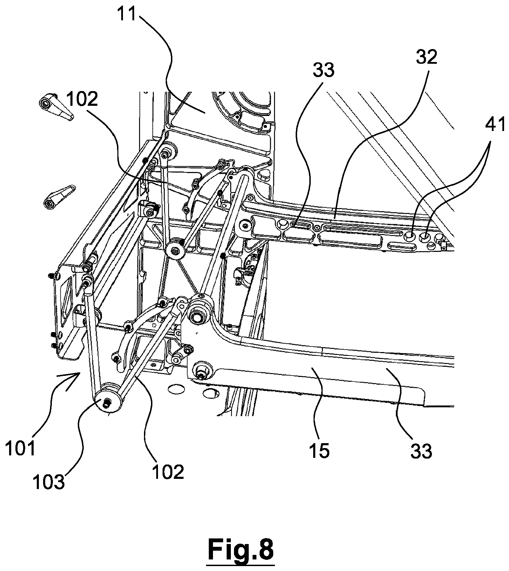

En outre, il sera possible de prévoir un deuxième système de repliage automatique 101 du siège 10 pour le faire passer d'une position assise à une position de stockage. A cet effet, comme on cela est visible en figure 8, le système de repliage automatique 101 comporte un câble élastique 102 ayant une extrémité fixée à la structure de siège 11 et une autre extrémité fixée à la glissière d'assise 15. Le câble 102 passe par au moins une poulie d'orientation 103 du câble située entre les deux extrémités du câble 102. Le système est configuré de sorte que le câble 102 présente une forme en V.

On décrit ci-après une utilisation du siège 10 pour le faire passer d'une position de stockage à une position de confort.

Dans un premier temps, l'utilisateur fait tourner l'ensemble assise 16 et glissière d'assise 15 par rapport à la structure de siège 11 pour faire passer le siège 10 de la position de stockage à la position assise.

Après avoir pris place sur le siège 10, le mouvement d'extension de l'assise 16 pour passer en position de confort pourra être commandé par actionnement du levier 36 et poussée du bassin de l'utilisateur vers l'avant du siège 10. En effet, l'actionnement du levier 36 engendre un déverrouillage des pions de verrouillage 40 qui se désengagent des logements 41 correspondants ménagés dans la glissière d'assise 15. L'assise 16 coulisse alors vers l'avant le long des rails 32 et le dossier 18 s'incline en accompagnant le mouvement de translation de l'assise 16. La têtière 19 pourra suivre le mouvement d'inclinaison du dossier 18 vers l'arrière grâce à l'ensemble galets 86, 92/rails 88, 93 précédemment décrit.

Lorsque l'occupant est dans la position souhaitée (position de confort ou position intermédiaire), un relâchement du levier 36 entraîne un verrouillage des pions 40 dans les logements correspondant à cette position.

Par ailleurs, si l'occupant souhaite disposer du repose-jambes 22 stocké sous l'assise 16, il actionne le levier 71, ce qui a pour effet de libérer le crochet 68 du logement de verrouillage 65 et donc de faire tourner par gravité le repose-jambes 22 autour de son axe 54 jusqu'à une position intermédiaire stable dans laquelle le repose-jambes 22 forme un angle de l'ordre de 90 degrés par rapport à l'assise 16. L'occupant peut alors saisir le repose-jambes 22 pour le déplacer jusqu'à ce qu'il se trouve en position dépliée dans laquelle les loquets 62 du système 61 viennent bloquer les extrémités de la barre de synchronisation 57 après que cette dernière ait coulissé le long des rails 59 via les galets 58.

Il est à noter que toutes les manipulations du siège 10 réalisées via les leviers 36, 71 pour le faire passer d'une position de stockage à une position de confort peuvent être réalisées alors que l'occupant est installé sur le siège 10, ce qui n'est pas possible sur les sièges pour personnel de bord de type classique.

Pour refaire passer le siège 10 d'une position de confort à une position de stockage, l'occupant range dans un premier temps le repose-jambes 22. A cet effet, il actionne le levier 71, ce qui a pour effet de rétracter les loquets 62 du système 61 et donc de libérer la barre de synchronisation 57. En conséquence, le repose-jambes 22 tourne par gravité autour de son axe 54 jusqu'à la position intermédiaire stable. L'occupant peut alors saisir le repose-jambes 22 pour le déplacer jusqu'à ce qu'il se trouve en position de stockage dans laquelle le crochet 68 du système 64 coopère avec le logement de verrouillage 65.

L'occupant pourra ensuite actionner le levier 36 qui engendre un déverrouillage des pions de verrouillage 40 qui se désengagent des logements 41 correspondants ménagés dans la glissière d'assise 15. Du fait de la présence du câble élastique 97 du système 96 qui exerce un effort de traction sur l'assise 16 vers l'arrière du siège 10, le siège 10 repasse automatiquement de la position de confort à la position assise.

Lorsque l'occupant se relève, le siège 10 repasse automatiquement de la position assise à la position de stockage du fait de la présence du câble élastique 102 du système 101 qui exerce un effort de traction sur l'assise 16 forçant ainsi sa rotation vers la position de stockage.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association, tel que décrit dans le jeu de revendications qui suit.

## Revendications

1. Siège (10) pour personnel de bord destiné à être installé dans un aéronef, comportant:
- une structure de siège (11) pouvant être fixée à une partie fixe de l'aéronef,
- une assise (16),
- une glissière d'assise (15) munie de deux bras (33) positionnés de part et d'autre de l'assise (16), et
- l'assise (16) étant montée coulissante par rapport à la glissière d'assise (15) entre une position rétractée et une position déployée,
- l'un des éléments parmi l'assise (16) et la glissière d'assise (15) comportant des galets (30) aptes à glisser le long de rails (32) correspondants ménagés dans l'autre des éléments parmi l'assise et la glissière d'assise (15),
- les rails (32) présentant une forme incurvée de sorte que l'assise (16) peut former
en position déployée un angle (A1) supérieur à 10 degrés, de préférence de l'ordre de 14 degrés par rapport à un plan horizontal parallèle au plancher de l'aéronef,
**caractérisé en ce que** ledit siège comporte en outre un dossier (18) ayant une première extrémité montée rotative par rapport à l'assise (16) et une deuxième extrémité montée rotative par rapport à une têtière (19) dudit siège (10), ladite têtière (19) étant montée coulissante par rapport à la structure de siège (11) de manière à accompagner un mouvement dudit dossier (18).

2. Siège (10) selon la revendication 1, **caractérisé en ce que** la glissière d'assise (15) est montée rotative par rapport à la structure de siège (11) pour permettre au siège (10) de passer d'une position de stockage à une position assise.

3. Siège (10) selon la revendication 1 ou 2, **caractérisé en ce qu'**un moyen de manœuvre (36), tel qu'un levier, est apte à commander le passage d'une position à une autre par déverrouillage d'au moins un pion de verrouillage (40) coopérant avec un logement (41) ménagé dans la glissière d'assise (15), ledit moyen de manœuvre (36) étant relié au pion de verrouillage (40) via un câble de liaison (48).

4. Siège (10) selon l'une quelconque des revendications 1 à 3, **caractérisé en ce qu'**il comporte un repose-jambes (22) couplé à un axe (54) monté rotatif par rapport à l'assise (16) pour pouvoir passer d'une position de stockage dans laquelle le repose-jambes (22) se situe sous l'assise (16) à une position dépliée dans laquelle le repose-jambes (22) se situe dans le prolongement de l'assise (16).

5. Siège (10) selon la revendication 4, **caractérisé en ce que** ledit repose-jambes (22) comporte une barre de synchronisation (57) constituée à chacune de ses extrémités d'un galet (58), chaque galet (58) étant apte à glisser le long d'un rail (59) ménagé dans une face interne d'une paroi latérale (31) de l'assise (16).

6. Siège (10) selon la revendication 5, **caractérisé en ce qu'**un premier système de verrouillage (61) comporte un loquet de verrouillage (62) apte à bloquer la barre de synchronisation (57) pour maintenir le repose-jambes (22) en position dépliée.

7. Siège (10) selon la revendication 6, **caractérisé en ce qu'**il comporte un deuxième système de verrouillage (64) apte à bloquer le repose-jambes (22) en position de stockage.

8. Siège (10) selon la revendication 7, **caractérisé en ce que** le deuxième système de verrouillage (64) comporte un logement de verrouillage (65) implanté du côté du bord avant du repose-jambes (22) apte à coopérer avec un crochet de verrouillage (68) implanté du côté du bord arrière de l'assise (16).

9. Siège (10) selon les revendications 6 et 7, **caractérisé en ce que** le premier et le deuxième systèmes de verrouillage (61, 64) sont actionnables via un moyen de manœuvre commun (71), tel qu'un levier.

10. Siège (10) selon l'une quelconque des revendications 4 à 9, **caractérisé en ce qu'**un système d'amortissement (23) est apte à absorber un effort appliqué sur le repose-jambes (22) dépassant un seuil limite.

11. Siège (10) selon l'une quelconque des revendications 1 à 10, **caractérisé en ce qu'**il comporte un repose-pieds (26) monté coulissant par rapport au repose-jambes (22), et **en ce qu'**un moyen élastique (77) est interposé entre le repose-pieds (26) et le repose-jambes (22).

12. Siège (10) selon l'une quelconque des revendications 1 à 11, **caractérisé en ce qu'**il comporte un système de repliage automatique (96) pour faire passer ledit siège (10) automatiquement d'une position de confort à une position assise.

13. Siège (10) selon la revendication 12, **caractérisé en ce que** le système de repliage automatique (96) comporte un câble élastique (97) ayant une extrémité fixée à la structure de siège (11) et une autre extrémité fixée à l'assise (16), ledit câble (97) passant par au moins une poulie (98) d'orientation du câble située entre les deux extrémités dudit câble.

14. Siège (10) selon l'une quelconque des revendications 1 à 13, **caractérisé en ce qu'**il comporte un système de repliage automatique (101) pour faire passer ledit siège (10) automatiquement d'une position assise à une position de stockage.

15. Siège (10) selon la revendication 14, **caractérisé en ce que** le système de repliage automatique (101) comporte un câble élastique (102) ayant une extrémité fixée à la structure de siège (11) et une autre extrémité fixée à la glissière d'assise (15), ledit câble (102) passant par au moins une poulie (103) d'orientation du câble située entre les deux extrémités dudit câble.

## Patentansprüche

1. Sitz (10) zum Einbau in ein Flugzeug für die Besatzung, umfassend:
- eine Sitzstruktur (11), die an einem festen Teil des Flugzeugs befestigbar ist,
- eine Sitzfläche (16),
- eine Sitzflächenführung (15), die mit zwei Armen (33) versehen ist, die auf beiden Seiten der Sitzfläche (16) positioniert sind, und
- wobei die Sitzfläche (16) so montiert ist, dass sie relativ zur Sitzflächenführung (15) zwischen einer eingefahrenen Position und einer ausgefahrenen Position gleiten kann,
- wobei eines der Elemente der Sitzfläche (16) und der Sitzflächenführung (15) Rollen (30) umfasst, die auf entsprechenden Schienen (32) gleiten können, die in dem anderen der Elemente der Sitzfläche und der Sitzflächenführung vorgesehen (15) sind,
- wobei die Schienen (32) eine gekrümmte Form haben, so dass die Sitzfläche (16) in der ausgefahrenen Position einen Winkel (A1) von mehr als 10 Grad, vorzugsweise in der Größenordnung von 14 Grad, relativ zu einer horizontalen, zum Flugzeugboden parallelen Ebene bilden kann,
**dadurch gekennzeichnet, dass** der Sitz ferner eine Rückenlehne (18) mit einem relativ zur Sitzfläche (16) drehbar montierten ersten Ende und einem relativ zu einer Kopfstütze (19) des Sitzes (10) drehbar montierten zweiten Ende aufweist, wobei die Kopfstütze (19) relativ zur Sitzstruktur (11) verschiebbar montiert ist, um einer Bewegung der Rückenlehne (18) zu folgen.

2. Sitz (10) nach Anspruch 1, **dadurch gekennzeichnet, dass** der Sitzflächenführung (15) relativ zur Sitzstruktur (11) drehbar montiert ist, um eine Bewegung des Sitzes (10) von einer Lagerungsposition in eine Sitzposition zu ermöglichen.

3. Sitz (10) nach Anspruch 1 oder 2, **dadurch gekennzeichnet, dass** ein Betätigungsmittel (36), beispielsweise ein Hebel, den Übergang von einer Position in eine andere durch Entriegeln mindestens eines mit einer Aufnahme (41) im Sitzflächenführung (15) zusammenwirkenden Sperrstifts (40) steuern kann, wobei das Betätigungsmittel (36) über ein Verbindungskabel (48) mit dem Sperrstift (40) verbunden ist.

4. Sitz (10) nach einem der Ansprüche 1 bis 3, **dadurch gekennzeichnet, dass** er eine Beinstütze (22) umfasst, die mit einer relativ zur Sitzfläche (16) drehbar montierten Achse (54) gekoppelt ist, um die Umschaltung von einer Lagerungsposition, in der sich die Beinstütze (22) unter der Sitzfläche (16) befindet, in eine ausgefahrene Position, in der sich die Beinstütze (22) in Verlängerung der Sitzfläche (16) befindet, zu ermöglichen.

5. Sitz (10) nach Anspruch 4, **dadurch gekennzeichnet, dass** die Beinstütze (22) eine Synchronisationsstange (57) umfasst, die an jedem ihrer Enden eine Rolle (58) umfasst, wobei jede Rolle (58) entlang einer Schiene (59) in einer Innenfläche einer Seitenwand (31) der Sitzfläche (16) verschiebbar ausgebildet ist.

6. Sitz (10) nach Anspruch 5, **dadurch gekennzeichnet, dass** ein erstes Verriegelungssystem (61) eine Verriegelungsklinke (62) umfasst, die die Synchronisationsstange (57) blockieren kann, um die Beinstütze (22) in der ausgefahrenen Position zu halten.

7. Sitz (10) nach Anspruch 6, **dadurch gekennzeichnet, dass** er ein zweites Verriegelungssystem (64) umfasst, das die Beinstütze (22) in der Lagerungsposition blockieren kann.

8. Sitz (10) nach Anspruch 7, **dadurch gekennzeichnet, dass** das zweite Verriegelungssystem (64) eine Verriegelungsaufnahme (65) umfasst, die sich an der Seite der Vorderkante der Beinstütze (22) befindet und mit einer Verriegelungshaken (68) an der Seite der Hinterkante der Sitzfläche (16) zusammenwirken kann.

9. Sitz (10) nach den Ansprüchen 6 und 7, **dadurch gekennzeichnet, dass** die erste und zweite Verriegelungssysteme (61, 64) über ein gemeinsames Betätigungsmittel (71), beispielsweise einen Hebel, betätigbar sind.

10. Sitz (10) nach einem der Ansprüche 4 bis 9, **dadurch gekennzeichnet, dass** ein Dämpfungssystem (23) eine Kraft aufnehmen kann, die auf die Beinstütze (22) einwirkt und eine Grenzschwelle überschreitet.

11. Sitz (10) nach einem der Ansprüche 1 bis 10, **dadurch gekennzeichnet, dass** er eine relativ zur Beinstütze (22) verschiebbar montierte Fußstütze (26) umfasst, und dass ein elastisches Mittel (77) zwischen der Fußstütze (26) und der Beinstütze (22) angeordnet ist.

12. Sitz (10) nach einem der Ansprüche 1 bis 11, **dadurch gekennzeichnet, dass** er ein automatisches Einfahrsystem (96) zum automatischen Bewegen des Sitzes (10) von einer Komfortposition in eine Sitzposition umfasst.

13. Sitz (10) nach Anspruch 12, **dadurch gekennzeichnet, dass** das automatische Einfahrsystem (96) ein elastisches Seil (97) mit einem an der Sitzstruktur (11) befestigten Ende und einem anderen, an der Sitzfläche (16) befestigten Ende umfasst, wobei sich das Seil (97) durch mindestens eine zwischen den beiden Enden des Seils liegende Seilausrichtungsrolle (98) erstreckt.

14. Sitz (10) nach einem der Ansprüche 1 bis 13, **dadurch gekennzeichnet, dass** er ein automatisches Einfahrsystem (101) zum automatischen Bewegen des Sitzes (10) von einer Sitzposition in eine Lagerungsposition umfasst.

15. Sitz (10) nach Anspruch 14, **dadurch gekennzeichnet, dass** das automatische Einfahrsystem (101) ein elastisches Seil (102) mit einem an der Sitzstruktur (11) befestigten Ende und einem andere, an der Sitzfläche (15) befestigten Ende umfasst, wobei sich das Seil (102) durch mindestens eine zwischen den beiden Enden des Seils liegenden Seilausrichtungsrolle (103) erstreckt.

## Claims

1. A crew seat (10) to be installed in an aircraft, comprising:
- a seat structure (11) which can be fixed to a fixed part of the aircraft,
- a seat bottom (16),
- a seat bottom slide (15) provided with two arms (33) positioned on either side of the seat bottom (16), and
- the seat bottom (16) being mounted so as to slide relative to the seat bottom slide (15) between a retracted position and a deployed position,
- one of the elements among the seat bottom (16) and the seat bottom slide (15) comprising rollers (30) able to slide along corresponding rails (32) provided in the other of the elements among the seat bottom and the seat bottom slide (15),
- the rails (32) having a curved shape so that the seat bottom (16) can form in the deployed position an angle (A1) greater than 10 degrees, preferably of the order of 14 degrees, relative to a horizontal plane parallel to the aircraft floor,
**characterized in that** said seat further comprises a backrest (18) having a first end rotatably mounted relative to the seat bottom (16) and a second end rotatably mounted relative to a headrest (19) of said seat (10), said headrest (19) being slidably mounted relative to the seat structure (11) so as to follow a movement of said backrest (18).

2. The seat (10) according to claim 1, **characterized in that** the seat bottom slide (15) is rotatably mounted relative to the seat structure (11) so as to allow the seat (10) to move from a storage position to a seated position.

3. The seat (10) according to claim 1 or 2, **characterized in that** an operating means (36), such as a lever, is able to control the passage from one position to another by unlocking at least one locking pin (40) cooperating with a housing (41) in the seat bottom slide (15), said operating means (36) being connected to the locking pin (40) via a connecting cable (48).

4. The seat (10) according to any one of the claims 1 to 3, **characterized in that** it comprises a legrest (22) coupled to an axis (54) rotatably mounted relative to the seat bottom (16) in order to be able to switch from a storage position, in which the legrest (22) is located under the seat bottom (16), to an deployed position in which the legrest (22) is located in the extension of the seat bottom (16).

5. The seat (10) according to claim 4, **characterized in that** said legrest (22) comprises a synchronization bar (57) including a roller (58) at each of its ends, each roller (58) being able to slide along a rail (59) formed in an internal face of a side wall (31) of the seat bottom (16).

6. The seat (10) according to claim 5, **characterized in that** a first locking system (61) comprises a locking latch (62) able to block the synchronization bar (57) in order to hold the legrest (22) in the deployed position.

7. The seat (10) according to claim 6, **characterized in that** it comprises a second locking system (64) able to block the legrest (22) in the storage position.

8. The seat (10) according to claim 7, **characterized in that** the second locking system (64) comprises a locking housing (65) located on the side of the front edge of the legrest (22) and able to cooperate with a locking hook (68) located on the side of the rear edge of the seat bottom (16).

9. The seat (10) according to the claims 6 and 7, **characterized in that** the first and second locking systems (61, 64) are operable via a common operating means (71), such as a lever.

10. The seat (10) according to any one of the claims 4 to 9, **characterized in that** a damping system (23) is able to absorb a force, which is applied to the legrest (22) and exceeds a limit threshold.

11. The seat (10) according to any one of the claims 1 to 10, **characterized in that** it comprises a footrest (26) slidably mounted relative to the legrest (22), and **in that** an elastic means (77) is interposed between the footrest (26) and the legrest (22).

12. The seat (10) according to any one of the claims 1 to 11, **characterized in that** it comprises an automatic retracting system (96) for automatically moving said seat (10) from a comfort position to a seated position.

13. The seat (10) according to claim 12, **characterized in that** the automatic retracting system (96) comprises an elastic cable (97) having one end fixed to the seat structure (11) and another end fixed to the seat bottom (16), said cable (97) extending through at least one cable orientation pulley (98) located between the two ends of said cable.

14. The seat (10) according to any one of the claims 1 to 13, **characterized in that** it comprises an automatic retracting system (101) for automatically moving said seat (10) from a seated position to a storage position.

15. The seat (10) according to claim 14, **characterized in that** the automatic retracting system (101) comprises an elastic cable (102) having one end fixed to the seat structure (11) and another end fixed to the seat bottom slide (15), said cable (102) extending through at least one cable orientation pulley (103) located between the two ends of said cable.
